# EUROPÄISCHE PATENTSCHRIFT

(11) **EP 2 602 468 B1**
(45) Veröffentlichungstag und Bekanntmachung des Hinweises auf die Patenterteilung: **07.01.2015**
(21) Anmeldenummer: 12194464.9
(22) Anmeldetag: 27.11.2012
(51) Int. Cl.: F02M 25/07, F02M 35/10, F02B 29/04

(54) **Brennkraftmaschine mit Abgasrückführungseinrichtung**
Internal combustion engine with exhaust gas recirculation system
Moteur à combustion interne avec système de recirculation de gaz d'échappement

(30) Priorität: 08.12.2011 DE 102011120422
(43) Veröffentlichungstag der Anmeldung: 12.06.2013
(73) Patentinhaber: MANN + HUMMEL GMBH, 71638 Ludwigsburg (DE)
(72) Erfinder: Talmon-Gros, Dietmar, 71720 Oberstenfeld (DE); Huurdeman, Bernhard, 71691 Freiberg (DE); Dehnen, Ulrich, 70806 Kornwestheim (DE); Fledersbacher, Peter, 70569 Stuttgart (DE)

(56) Entgegenhaltungen:
- DE-U1-202007 005 986
- US-A1- 2008 134 678
- US-A1- 2011 011 084

## Beschreibung

### Technisches Gebiet

Die Erfindung bezieht sich auf eine Brennkraftmaschine mit einer Abgasrückführungseinrichtung nach dem Oberbegriff des Anspruches 1.

### Stand der Technik

In der DE 20 2007 005 986 U1 wird eine aufgeladene Brennkraftmaschine beschrieben. Im Ansaugtrakt der Brennkraftmaschine befindet sich ein Verdichter, der Teil eines Abgasturboladers ist und von einer Abgasturbine im Abgasstrang angetrieben wird. Der Ansaugtrakt weist einen Hauptkanal und einen hiervon verzweigenden Sekundärkanal auf, wobei die Strömungsquerschnitte im Hauptkanal und Sekundärkanal über Luftklappen einstellbar sind. Der Hauptkanal und der Sekundärkanal münden in einen Verdichtereintrittsbereich, in welchem ein Drallerzeuger angeordnet ist, um dem herangeführten Verbrennungsluftstrom einen Drall aufzuprägen.

Die Abgasrückführungseinrichtung umfasst eine Rückführleitung, die in den Sekundärkanal stromauf des Drallerzeugers einmündet.

### Offenbarung der Erfindung

Der Erfindung liegt die Aufgabe zugrunde, in einer Brennkraftmaschine in einem großen Betriebsbereich eine Abgasrückführung zu ermöglichen.

Diese Aufgabe wird erfindungsgemäß mit den Merkmalen des Anspruches 1 gelöst. Die Unteransprüche geben zweckmäßige Weiterbildungen an.

Die Brennkraftmaschine weist einen Verdichter im Ansaugtrakt auf, über den die herangeführte Verbrennungsluft auf einen erhöhten Ladedruck verdichtet wird, unter dem die Luft den Zylindern der Brennkraftmaschine zugeführt wird. Der Verdichter ist vorzugsweise Bestandteil eines Abgasturboladers und wird von einer Abgasturbine angetrieben, die im Abgasstrang der Brennkraftmaschine angeordnet ist und von den unter Druck stehenden Abgasen angetrieben wird. Grundsätzlich kommt als Verdichter auch ein Kompressor in Betracht, der von der Brennkraftmaschine mechanisch oder von einem Elektromotor angetrieben wird.

Des Weiteren ist die Brennkraftmaschine mit einer Abgasrückführungseinrichtung ausgestattet, die es erlaubt, in bestimmten Betriebsbereichen Abgas in den Ansaugtrakt rückzuführen. Die Abgasrückführungseinrichtung umfasst eine Rückführleitung, die vom Abgasstrang verzweigt und in den Ansaugtrakt mündet. In der Rückführleitung befindet sich zweckmäßigerweise ein Abgaskühler sowie ein einstellbares Rückführventil zum Regulieren des rückgeführten Abgasstroms.

Der Ansaugtrakt der Brennkraftmaschine weist einen Hauptkanal sowie einen Sekundärkanal auf, welcher ein einstellbares Stellglied im Hauptkanal überbrückt und stromab des Stellglieds wieder in den Hauptkanal bzw. einen Verdichtereintrittsbereich einmündet. Vorteilhafterweise ist auch im Sekundärkanal ein Stellglied angeordnet, so dass der Luftmassenstrom sowohl durch den Hauptkanal als auch durch den Sekundärkanal über Stellglieder einzustellen ist. Vorteilhafterweise sind die Stellglieder unabhängig voneinander einzustellen; in Betracht kommt aber auch eine Ausführung mit einem gemeinsamen Stellglied, über das das Verhältnis der Luftmassenströme durch den Haupt-und Sekundärkanal einstellbar ist.

Dem Sekundärkanal ist ein Luftsammler nachgeschaltet, der mit dem Verdichtereintrittsbereich strömungsverbunden ist. Die durch den Sekundärkanal strömende Verbrennungsluft gelangt zunächst in den Luftsammler, anschließend wird die Verbrennungsluft in den Verdichtereintrittsbereich geleitet, in den auch die über den Hauptkanal herangeführte Verbrennungsluft gelangt.

Die Rückführleitung mündet in den Luftsammler, in welchem somit auch die Durchmischung von Verbrennungsluft aus dem Sekundärkanal und rückgeführtem Abgas stattfindet. Die verbesserte, gleichmäßigere Durchmischung verbessert das Verbrennungsverhalten, außerdem wird eine Vergleichmäßigung der Temperatur erreicht, so dass lokale Temperaturspitzen, die auf den Einfluss des rückgeführten Abgases zurückgehen, vermieden werden.

Der Ansaugtrakt mit Hauptkanal und Sekundärkanal erlaubt eine Betriebsweise, bei der bei geschlossenem oder teilgeschlossenem Stellglied im Hauptkanal Abgas über die Rückführleitung in den Luftsammler eingeleitet wird. Das geschlossene oder teilgeschlossene Stellglied im Hauptkanal entspricht dem Teillastbereich der Brennkraftmaschine. In diesem Betriebszustand entsteht im Sekundärkanal und im Luftsammler ein Unterdruck, der für die Abgasrückführung genutzt werden kann.

Gemäß einer zweckmäßigen Ausführung ist vorgesehen, dass im Sekundärkanal bzw. dem mit dem Sekundärkanal kommunizierenden Luftsammler ein Drallerzeugungselement angeordnet ist. Über das Drallerzeugungselement kann die dem Verdichterrad des Verdichters zugeführte Verbrennungsluft mit einem Drall beaufschlagt werden. Die Einleitung des Abgases kann stromauf oder stromab oder in Höhe des Drallerzeugungselementes erfolgen.

Der Luftsammler weist gegenüber dem Sekundärkanal einen vergrößerten Querschnitt auf, was die Durchmischung von Verbrennungsluft und Abgas begünstigt. Der Luftsammler kann den Hauptkanal bzw. den Verdichtereintrittsbereich zumindest abschnittsweise ring- oder spiralförmig umgreifen. Der Übertritt der Verbrennungsluft bzw. des Luft-Abgas-Gemisches aus dem Luftsammler zum Verdichterrad erfolgt in Radialrichtung bzw. mit einer radialen Komponente, bezogen auf die axiale Anströmung des Verdichterrades.

Gemäß einer weiteren vorteilhaften Ausführung mündet die Rückführleitung zunächst in einen Abgassammler, der sich am Ende der Rückführleitung befindet und mit dem Luftsammler verbunden ist. Bei der Abgasrückführung strömt das Abgas über die Rückführleitung somit zunächst in den Abgassammler und anschließend in den Luftsammler, in welchem die Durchmischung mit der Verbrennungsluft stattfindet, welche über den Sekundärkanal herangeführt wird. Der Abgassammler kann den Hauptkanal bzw. den Verdichtereintrittsbereich zumindest abschnittsweise ring- oder spiralförmig umgreifen.

Zweckmäßigerweise besitzt der Mündungsbereich des Abgassammlers in den Luftsammler einen reduzierten Querschnitt, so dass nach dem Venturi-Prinzip die Strömung aufgrund der Querschnittsreduzierung beschleunigt und der statische Druck abgesenkt wird, was die Abgasrückführung weiter verbessert. Der Mündungsbereich zwischen dem Abgassammler und dem Luftsammler erstreckt sich beispielsweise in Achsrichtung, bezogen auf die Längs- bzw. Drehachse des Verdichterrades und die Anströmrichtung auf das Verdichterrad.

Gemäß noch einer weiteren zweckmäßigen Ausführung ist mindestens eine Mischkammer vorgesehen, die dem Luftsammler nachgeschaltet ist und in den Verdichtereintrittsbereich mündet. Ausch in der Mischkammer findet die Durchmischung von Luft und Abgas statt. Die Mischkammer befindet sich im Strömungsbereich zwischen Luftsammler und Verdichtereintrittsbereich und kann ebenfalls einen Venturi-Effekt mit erhöhten Strömungsgeschwindigkeiten aufgrund reduzierten Querschnittes und einer Absenkung des statischen Drucks aufweisen. Zweckmäßigerweise sind mehrere derartige Mischkammern vorgesehen, die sich beispielsweise ringförmig um den Verdichtereintrittsbereich gruppieren. Die Mischkammern sind, gemäß weiterer zweckmäßiger Ausführung, jeweils zwischen zwei Leitschaufeln gebildet, die am Gehäuse des Verdichters gelagert sind und gegebenenfalls radial in den Verdichtereintrittsbereich einragen.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 in schematischer Darstellung eine Brennkraftmaschine mit Abgasturbolader und Abgasrückführungseinrichtung, wobei der Ansaugtrakt aus einem Hauptkanal und einem parallel verlaufenden Sekundärkanal besteht,
Fig. 2 in vergrößerter Darstellung der Ansaugtrakt mit Haupt- und Sekundärkanal sowie einem dem Sekundärkanal nachgeschalteten Luftsammler und einem Abgassammler, in den die Rückführleitung der Abgasrückführungseinrichtung mündet,
Fig. 3 einen Schnitt durch ein Gehäuse mit dem Verdichtereintrittsbereich und dem Luft- sowie dem Abgassammler,
Fig. 4 eine der Fig. 3 entsprechende Darstellung, jedoch mit zusätzlichen Leitschaufeln im Verdichtereintrittsbereich, zwischen denen Mischkammern gebildet sind.

In den Figuren sind gleiche Bauteile mit gleichen Bezugszeichen versehen.

### Ausführungsform(en) der Erfindung

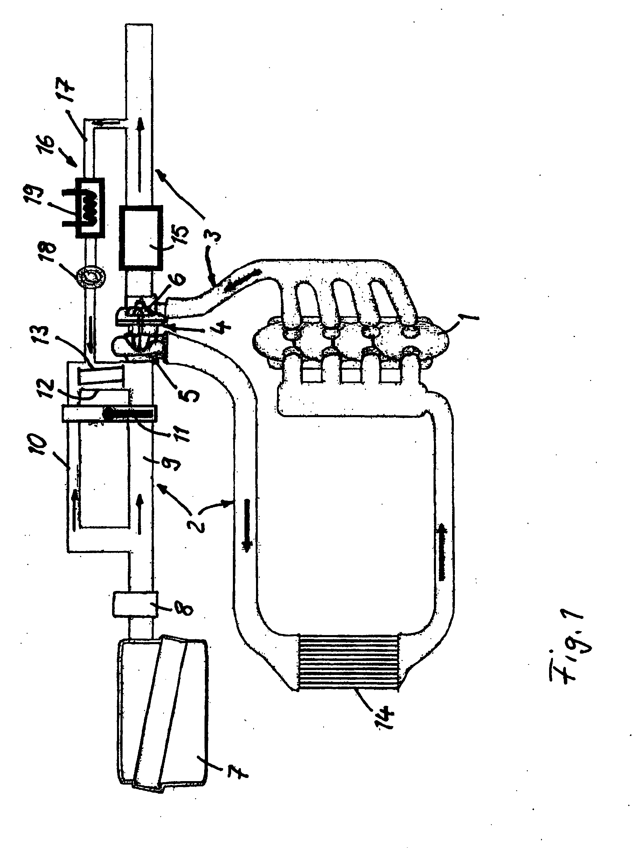

In Fig. 1 ist eine Brennkraftmaschine 1 schematisch dargestellt, der über den Ansaugtrakt 2 Verbrennungsluft zuführbar ist. Die im Betrieb emittierten Abgase werden über den Abgasstrang 3 abgeleitet. Die Brennkraftmaschine 1 ist mit einem Abgasturbolader 4 versehen, der einen Verdichter 5 im Ansaugtrakt 2 und eine Abgasturbine 6 im Abgasstrang 3 umfasst. Das Turbinenrad der Abgasturbine 6 wird von den unter Druck stehenden Abgasen angetrieben und überträgt die Drehbewegung auf das Verdichterrad im Verdichter 5, woraufhin herangeführte Verbrennungsluft auf einen erhöhten Ladedruck verdichtet wird, unter dem die Verbrennungsluft in die Zylinder der Brennkraftmaschine geleitet wird.

Die herangeführte Verbrennungsluft wird zunächst in einem Luftfilter 7 einer Filtration unterzogen. Stromab eines dem Luftfilter 7 nachgeschalteten Luftmassenmessers 8 teilt sich der Abgasstrang 2 in einen Hauptkanal 9 und einen parallel angeordneten Sekundärkanal 10 auf. Der Luftmassenstrom durch den Hauptkanal 9 ist über ein verstellbares Stellglied 11 zu regulieren. Es kann zweckmäßig sein, auch im Sekundärkanal 10 ein Stellglied vorzusehen oder das Stellglied 11 so auszubilden, dass der Luftmassenstrom sowohl durch den Hauptkanal 9 als auch durch den Sekundärkanal 10 beeinflussbar ist, insbesondere in der Weise, dass bei reduziertem Strömungsquerschnitt im Hauptkanal 9 der Strömungsquerschnitt im Sekundärkanal 10 vergrößert ist.

Der Sekundärkanal 10 mündet in einen Luftsammler 12, in welchem optional ein Drallerzeugungselement 13 angeordnet ist, über das die durch den Sekundärkanal 10 geleitete Verbrennungsluft mit einem Drall beaufschlagt wird, unter dem die Verbrennungsluft dem Verdichtereintritt des Verdichters 5 zugeführt wird. Der Luftsammler 12 mündet stromab des Stellglieds 11 in den Hauptkanal 9 bzw. den Verdichtereintrittsbereich, welcher unmittelbar dem Verdichterrad vorgeschaltet ist.

Stromab des Verdichters 5 ist in den Ansaugtrakt 2 ein Ladeluftkühler 14 integriert.

Stromab einer Abgasreinigungseinheit 15 im Abgasstrang 3, beispielsweise eines Dieselpartikelfilters, verzweigt vom Abgasstrang 3 eine Rückführleitung 17, die Teil einer Abgasrückführungseinrichtung 16 ist, über die Abgas in bestimmten Betriebszuständen, insbesondere im Teillastbereich der Brennkraftmaschine, aus dem Abgasstrang 3 in den Ansaugtrakt 2 rückgeführt wird. In der Rückführleitung 17 befindet sich ein einstellbares Rückführventil 18 sowie ein stromauf des Rückführventils 18 angeordneter Abgaskühler 19.

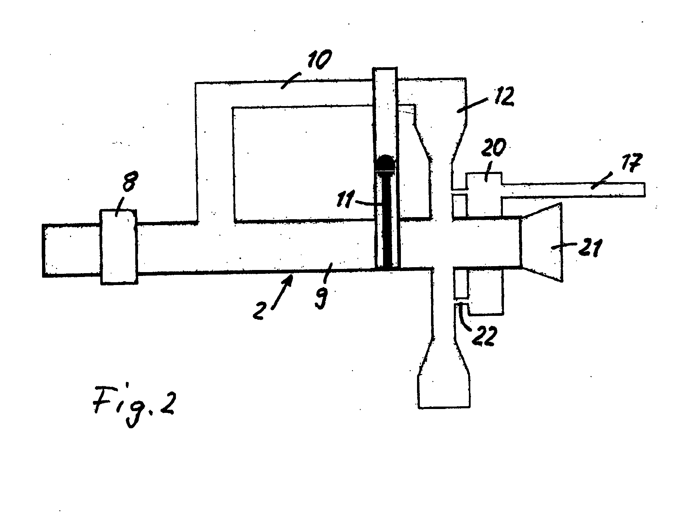

In Fig. 2 ist der Abgasstrang 2 stromauf des Verdichters in detaillierterer Darstellung gezeigt. Die Rückführleitung 17 der Abgasrückführungseinrichtung mündet in einen Abgassammler 20, der über einen Mündungsbereich 22 mit reduziertem Querschnitt mit dem Luftsammler 12 verbunden ist. Der Luftsammler 12 mündet in den Verdichtereintrittsbereich 21 bzw. in den Hauptkanal 9 stromab des Stellglieds 11 unmittelbar benachbart zum Verdichtereintrittsbereich, über den die Luft oder das Luft-Abgas-Gemisch axial dem Verdichterrad zugeführt wird. Sowohl der Luftsammler 12 als auch der Abgassammler 20 können den Verdichtereintrittsbereich 21 bzw. den letzten Abschnitt des Hauptkanals 9 ring- oder spiralförmig umgreifen.

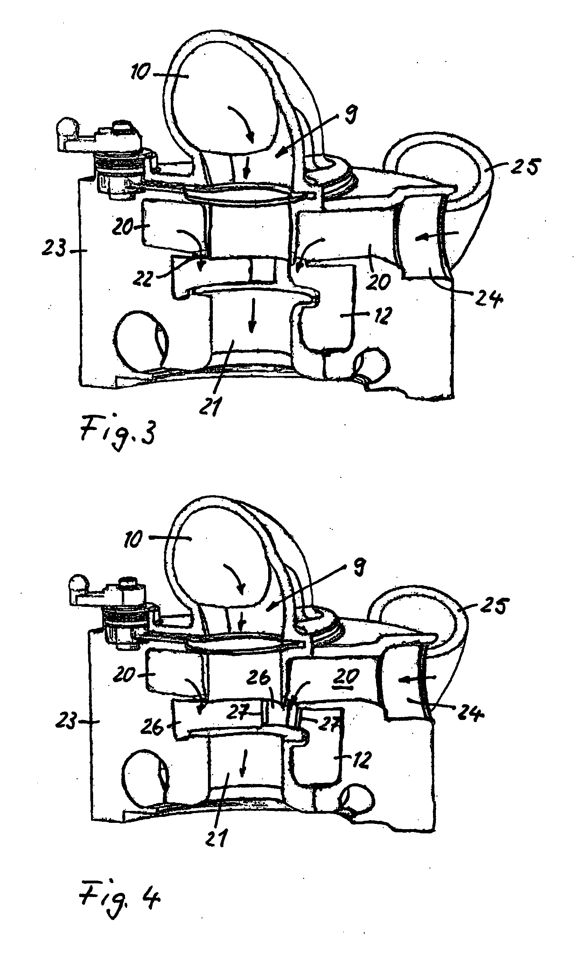

In Fig. 3 ist ein Schnitt durch ein Gehäuse 23 dargestellt, das insbesondere Teil des Verdichtergehäuses bzw. des Ladergehäuses sein kann und das die Anschlüsse für die Zuleitung von Verbrennungsluft und Abgas sowie für die Ableitung der Ladeluft aufweist. Der Sekundärkanal 10 mündet in den im Gehäuse angeordneten Luftsammler 12, der den Verdichtereintrittsbereich 21 umgreift. Das Abgas wird radial über einen Eintrittsbereich 24 in den Abgassammler 20 geführt, der über den Mündungsbereich 22 mit dem Luftsammler 12 verbunden ist. Wie mit den Pfeilen angegeben, erfolgt die Strömungsführung des Abgases radial über den Eintrittsbereich 24 in den Abgassammler 20 und anschließend in Achsrichtung über den Mündungsbereich 22 in den Luftsammler 12, von dem das Abgas-Verbrennungsluft-Gemisch in den Verdichtereintrittsbereich 21 und von dort weiter zum Verdichterrad strömt. Die Ableitung stromab des Verdichterrades erfolgt über einen Stutzen 25, an den ein weiterer Abschnitt des Ansaugtrakts angeschlossen ist.

Aufgrund des reduzierten Querschnitts des Mündungsbereiches 22 zwischen dem Abgassammler 20 und dem Luftsammler 12 wird eine Reduzierung des statischen Drucks im Abgassammler 20 erreicht, der die Rückführung von Abgas über die Rückführleitung begünstigt. In dem Luftsammler 12 findet eine gleichmäßige Durchmischung von Luft und Abgas statt, was mit einer Vergleichmäßigung des Temperaturniveaus einhergeht.

Das Ausführungsbeispiel gemäß Fig. 4 entspricht im Wesentlichen demjenigen nach Fig. 3, jedoch mit dem Unterschied, dass gemäß Fig. 4 zusätzliche Leitschaufeln 26 im Verdichtereintrittsbereich 21 vorgesehen sind, die radial einragen und zwischen denen Mischkammern 27 gebildet sind, in die aus dem Luftsammler 12 das Gemisch aus Verbrennungsluft und Abgas einströmt. Auch in den Mischkammern 27 findet eine Durchmischung von Luft und Abgas statt, außerdem wird auch hier ein Venturi-Effekt erzielt, der zu einer Absenkung des statischen Drucks und damit zu einer Begünstigung der Abgasrückführung führt. Von den Mischkammern 27 strömt das Gemisch in den Verdichtereintrittsbereich 21.

## Patentansprüche

1. Brennkraftmaschine mit einem Verdichter (5) im Ansaugtrakt (2) und einer Abgasrückführungseinrichtung (16), die eine Rückführleitung (17) zwischen dem Abgasstrang (3) und dem Ansaugtrakt (2) umfasst, wobei von einem Hauptkanal (9) des Ansaugtrakts (2) ein Sekundärkanal (10) abzweigt, der ein einstellbares Stellglied (11) im Hauptkanal (9) überbrückt, wobei der Sekundärkanal (10) mit dem Verdichtereintrittsbereich (21) des Verdichters (5) verbunden ist, **dadurch gekennzeichnet, dass** dem Sekundärkanal (10) ein Luftsammler (12) nachgeschaltet ist, der mit dem Verdichtereintrittsbereich (21) strömungsverbunden ist, und dass die Rückführleitung (17) in den Luftsammler (12) mündet.

2. Brennkraftmaschine nach Anspruch 1, **dadurch gekennzeichnet, dass** im Sekundärkanal (10) bzw. dem mit dem Sekundärkanal (10) kommunizierenden Luftsammler (12) ein Drallerzeugungselement (13) angeordnet ist.

3. Brennkraftmaschine nach Anspruch 1 oder 2, **dadurch gekennzeichnet, dass** der Luftsammler (12) den Hauptkanal (9) bzw. den Verdichtereintrittsbereich (21) zumindest abschnittsweise ring- oder spiralförmig umgreift.

4. Brennkraftmaschine nach einem der Ansprüche 1 bis 3, **dadurch gekennzeichnet, dass** die Rückführleitung (17) in einen Abgassammler (20) mündet, der mit dem Luftsammler (12) verbunden ist.

5. Brennkraftmaschine nach Anspruch 4, **dadurch gekennzeichnet, dass** der Abgassammler (20) den Hauptkanal (9) bzw. den Verdichtereintrittsbereich (21) zumindest abschnittsweise ring- oder spiralförmig umgreift.

6. Brennkraftmaschine nach Anspruch 4 oder 5, **dadurch gekennzeichnet, dass** der Mündungsbereich (22) des Abgassammlers (20) in den Luftsammler (12) einen reduzierten Querschnitt aufweist.

7. Brennkraftmaschine nach einem der Ansprüche 1 bis 6, **dadurch gekennzeichnet, dass** mindestens eine Mischkammer (27) angeordnet ist, die dem Luftsammler (12) nachgeschaltet ist und in den Verdichtereintrittsbereich (21) mündet.

8. Brennkraftmaschine nach Anspruch 7, **dadurch gekennzeichnet, dass** die Mischkammer (27) zwischen zwei Leitschaufeln (26) gebildet ist, die radial in den Verdichtereintrittsbereich (21) einragen.

9. Brennkraftmaschine nach Anspruch 8, **dadurch gekennzeichnet, dass** über den Umfang verteilt eine Mehrzahl von Leitschaufeln (26) mit zwischenliegenden Mischkammern (27) gebildet angeordnet sind.

10. Verfahren zum Betrieb einer Brennkraftmaschine (1) nach einem der Ansprüche 1 bis 9, bei dem bei geschlossenem Stellglied (11) im Hauptkanal (9) Abgas über die Rückführleitung (17) zurückgeführt wird.

## Claims

1. Internal combustion engine with a compressor (5) in the intake tract (2) and an exhaust gas recirculation system (16), which comprises a recirculation line (17) between the exhaust system branch (3) and the intake tract (2), a secondary channel (10) branching off from a main channel (9) of the intake tract (2) and bridging an adjustable actuator (11) in the main channel (9), the secondary channel (10) being connected with the compressor inlet area (21) of the compressor (5), **characterized in that** an intake-air plenum (12), which is flow-connected with the compressor inlet area (21), is disposed downstream of the secondary channel (10), and that the recirculation line (17) leads into the intake-air plenum (12).

2. Internal combustion engine according to claim 1, **characterized in that** a swirl-generating element (13) is disposed in the secondary channel (10) or the intake-air plenum (12) communicating with the secondary channel (10).

3. Internal combustion engine according to claim 1 or 2, **characterized in that** the intake-air plenum (12) encloses the main channel (9) or the compressor inlet area (21) at least sectionwise in an annular or spiral-shaped manner.

4. Internal combustion engine according to one of the claims 1 to 3, **characterized in that** the recirculation line (17) leads into an exhaust manifold (20), which is connected with the intake-air plenum (12).

5. Internal combustion engine according to claim 4, **characterized in that** the exhaust manifold (20) encloses the main channel (9) or the compressor inlet area (21) at least sectionwise in an annular or spiral-shaped manner.

6. Internal combustion engine according to claim 4 or 5, **characterized in that** the mouth area (22) of the exhaust manifold (20) into the intake-air plenum (12) features a reduced cross-section.

7. Internal combustion engine according to one of the claims 1 to 6, **characterized in that** at least one mixing chamber (27) is disposed, which is disposed downstream of the intake-air plenum (12) and leads into the compressor inlet area (21).

8. Internal combustion engine according to claim 7, **characterized in that** the mixing chamber (27) is formed between two guide vanes (26), which extend radially into the compressor inlet area (21).

9. Internal combustion engine according to claim 8, **characterized in that** a plurality of guide vanes (26) with intermediate mixing chambers (27) are disposed across the circumference.

10. Method for operating an internal combustion engine (1) according to one of the claims 1 to 9, with which exhaust gases are recirculated via the recirculation line (17) when the actuator (11) in the main channel (9) is closed.

## Revendications

1. Moteur à combustion interne avec un compresseur (5) dans le canal d'aspiration (2) et un dispositif de recirculation de gaz d'échappement (16) qui comprend une conduite de recirculation (17) entre le canal de gaz d'échappement (3) et le canal d'aspiration (2), un canal secondaire (10) bifurquant d'un canal principal (9) du canal d'aspiration (2) et comblant un élément de réglage (11) réglable dans le canal principal (9), le canal secondaire (10) étant relié à la zone d'entrée (21) du compresseur (5), **caractérisé en ce qu'**un collecteur d'air (12) relié pour l'écoulement à la zone d'entrée du compresseur (21) est monté en aval du canal secondaire (10), et que la conduite de recirculation (17) débouche dans le collecteur d'air (12).

2. Moteur à combustion interne selon la revendication 1, **caractérisé en ce qu'**un élément générateur de tourbillons (13) est disposé dans le canal secondaire (10) ou dans le collecteur d'air (12) communiquant avec le canal secondaire (10).

3. Moteur à combustion interne selon la revendication 1 ou 2, **caractérisé en ce que** le collecteur d'air (12) entoure, au moins sur certaines sections, de manière annulaire ou en forme der spirale, le canal principal (9) ou la zone d'entrée du compresseur (21).

4. Moteur à combustion interne selon l'une des revendications 1 à 3, **caractérisé en ce que** la conduite de recirculation (17) débouche dans un collecteur de gaz d'échappement (20) qui est relié au collecteur d'air (12).

5. Moteur à combustion interne selon la revendication 4, **caractérisé en ce que** le collecteur de gaz d'échappement (20) entoure, au moins sur certaines sections, de manière annulaire ou en forme de spirale, le canal principal (9) ou la zone d'entrée du compresseur (21).

6. Moteur à combustion interne selon la revendication 4 ou 5, **caractérisé en ce que** la zone d'embouchure (22) du collecteur de gaz d'échappement (20) dans le collecteur d'air (12) présente une section réduite.

7. Moteur à combustion interne selon l'une des revendications 1 à 6, **caractérisé en ce qu'**au moins une chambre de mélange (27) qui est montée en aval du collecteur d'air (12) et débouche dans la zone d'entrée du compresseur (21) est disposée.

8. Moteur à combustion interne selon la revendication 7, **caractérisé en ce que** la chambre de mélange (27) est formée entre deux pales directrices (26) qui pénètrent en sens radial dans la zone d'entrée du compresseur (21).

9. Moteur à combustion interne selon la revendication 8, **caractérisé en ce que** plusieurs pales directrices (26) avec des chambres de mélange (27) intermédiaires sont réparties sur la circonférence.

10. Procédé d'exploitation d'un moteur à combustion interne (1) selon l'une des revendications 1 à 9 selon lequel, lorsque l'élément de réglage (11) situé dans le canal principal (9) est fermé, des gaz d'échappement sont réintroduits par l'intermédiaire de la conduite de recirculation (17).
